# EUROPÄISCHE PATENTANMELDUNG

(11) **EP 4 553 003 A1**
(43) Veröffentlichungstag der Anmeldung: **14.05.2025**
(21) Anmeldenummer: 23208915.1
(22) Anmeldetag: 09.11.2023
(51) Int. Cl.: B65G 1/02, B65G 1/04, B65G 65/00

(54) **TRANSPORTEINHEIT FÜR EIN REGALLAGER**

(71) Anmelder: SmartTec GmbH, 63110 Rodgau (DE)
(72) Erfinder: GEISLER, Uwe, D-63110 Rodgau (DE); STIMPFLE, Matthias, D-63110 Rodgau (DE)
(74) Vertreter: Stein, Erik

(57) **Zusammenfassung**

Die Erfindung betrifft eine Transporteinheit (1) zum Einlagern und Auslagern von Gegenständen (19) in ein mehrere übereinander angeordnete Ablagefächer (5) aufweisendes Regallager (2), wobei die Transporteinheit (1) ein Rahmengehäuse (10) umfasst, das auf zwei gegenüberliegenden Seiten offen ist, in dem Rahmengehäuse (10) eine Ablagefläche (13) zur temporären Aufnahme eines ein- oder auszulagernden Gegenstandes (19) angeordnet ist, und ein Greifer (11) entlang einer durch die beiden offenen Seiten verlaufenden Achse verschiebbar gelagert ist, wobei der Greifer (11) mindestens ein Eingriffsmittel (12) aufweist, das ausgebildet ist, ein Ablagefach (5) lösbar an dem Greifer (11) festzulegen, und im Rahmengehäuse (10) mindestens ein relativ zur Ablagefläche (13) bewegbares Positioniermittel (16) zur Positionierung des Gegenstandes (19) auf der Ablagefläche (13) angeordnet ist.

## Beschreibung

### Gebiet der Erfindung

Die Erfindung betrifft eine Transporteinheit zum Einlagern und Auslagern von Gegenständen in ein mehrere übereinander angeordnete Ablagefächer aufweisendes Regallager, wobei die Transporteinheit ein Rahmengehäuse umfasst, das auf zwei gegenüberliegenden Seiten offen ist, in dem Rahmengehäuse eine Ablagefläche zur temporären Aufnahme eines ein- oder auszulagernden Gegenstandes angeordnet ist, und ein Greifer entlang einer durch die beiden offenen Seiten verlaufenden Achse verschiebbar gelagert ist. Weiterhin betrifft die Erfindung ein mit einer Transporteinheit ausgestattetes Regallager.

### Hintergrund der Erfindung

In Produktionsanlagen der Fertigungstechnik werden häufig Bauteile in Lagern vorgehalten, um sie bei Bedarf an vorgegebene Arbeitsplätze zu bringen. Dabei ist oftmals eine Vielzahl an unterschiedlichsten Bauteilen vorzuhalten, die in unterschiedlicher Häufigkeit und Menge an einem Arbeitsplatz benötigt werden. In der Elektronikindustrie beispielsweise werden zur Bestückung von Leiterplatten (Printed Circuit Boards, PCB) diverse Bauteile benötigt, die in sogenannten Gurtspulen, anderen Behältnissen oder als lose Ware vorgehalten werden. Die Effizienz einer gesamten Produktionsanlage hängt nicht zuletzt davon ab, wie schnell die jeweils benötigten Bauteile aus einem Lager zum betreffenden Arbeitsplatz, z.B. einem Bestückungsautomaten, gebracht und nach Abarbeitung des Arbeitsschrittes von dort wieder zum Lager zurücktransportiert werden. Ein wesentlicher Faktor ist dabei die Zeitspanne, die innerhalb des Lagersystems benötigt wird, ein Bauteil nach seiner Anforderung aus seinem Lagerplatz an der Warenausgabe bereitzustellen. Je kürzer diese Zeitspanne ist, umso effektiver und produktiver ist der Produktionsablauf.

Insbesondere für die Elektronikindustrie wurden Lagersysteme entwickelt, die auf einen möglichst hohen Automatisierungsgrad ausgerichtet sind. So offenbart das Dokument DE 10 2012 025 424 A1 beispielsweise eine Einrichtung zum Lagern und Bereitstellen von in Gurtspulen aufgenommenen elektrischen Bauelementen für elektronische Geräte, wobei die Gurtspulen in einer Übergabestation der Einrichtung bereitstellbar und in Ablagefächern einer Regaleinrichtung ablegbar sind. Die Gurtspulen sind mittels zumindest eines Schiebers in einer Einschubrichtung in die Ablagefächer einschiebbar, wobei der Schieber quer zur Einschubrichtung verfahrbar ist.

Eine ähnliche Einrichtung wird in dem Dokument DE 10 2013 006 524 A1 beschrieben. Die Einrichtung weist zumindest eine Station zur Eingabe und/oder Ausgabe der Gurtspulen auf und ist mit Transportmitteln versehen, durch welche die Gurtspulen zwischen der Station und Ablagefächern einer Regaleinrichtung transportierbar sind.

Trotz eines bereits reifen Standes der Technik für Lagersysteme in der Fertigungsindustrie besteht nach wie vor Bedarf an einer Minimierung der für die Einlagerung und Auslagerung von Bauteilen erforderlichen Zeitspanne. Eine weitere Herausforderung stellt die steigende Anzahl an unterschiedlichsten Bauteilen dar, die auf möglichst kleiner Fläche gelagert werden sollen.

### Der Erfindung zugrundeliegende Aufgabe

Der Erfindung liegt die Aufgabe zugrunde, ein Lagersystem bereitzustellen, das im Vergleich zu bekannten Systemen einen schnelleren Zugriff auf gelagerte Bauteile erlaubt. Der Erfindung liegt weiterhin die Aufgabe zugrunde, ein Lagersystem bereitzustellen, das auf kleinem Raum eine Vielzahl unterschiedlicher Bauteile aufnehmen kann, die flexibel je nach Bedarf ein- und ausgelagert werden können.

### Erfindungsgemäße Lösung

Die Lösung der gestellten Aufgabe gelingt durch eine Transporteinheit für ein Regallager mit den Merkmalen des Anspruchs 1, durch ein Ablagefach mit den Merkmalen des Anspruchs 9 sowie durch ein Regallager mit den Merkmalen des Anspruchs 10.

Im Folgenden ist, im Falle des Fehlens gegenteiliger Hinweise, jede Bezugnahme auf ein (auch durch unbestimmte und bestimmte Artikel), zwei oder eine andere Zahl von Gegenständen in der Weise zu verstehen, dass das Vorhandensein weiterer solcher Gegenstände nicht ausgeschlossen ist. Die Bezugszeichen in sämtlichen Ansprüchen haben keine einschränkende Wirkung, sondern sollen lediglich deren Lesbarkeit verbessern.

Im Folgenden werden die Begriffe "haben", "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen neben dem durch diese Begriffe eingeführten Merkmal keine weiteren Merkmale vorhanden sind, oder auf Situationen, in welchen ein oder mehrere weitere Merkmale vorhanden sind. Beispielsweise kann sich der Ausdruck "A hat B", "A weist B auf", "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder weitere Elemente.

Die Formulierung "und/oder" ist im Folgenden so zu verstehen, dass sämtliche Ausführungsformen umfasst sind, bei denen die mit "und/oder" verknüpften Merkmale jeweils einzeln oder gemeinsam vorhanden sind. Beispielsweise kann sich der Ausdruck "A und/oder B" sowohl auf die Situation beziehen, in welcher nur das Merkmal A oder nur das Merkmal B in einer Ausführungsform vorhanden ist, als auch auf die Situation, in welcher beide Merkmale A und B in derselben Ausführungsform vorhanden sind.

Weiterhin wird darauf hingewiesen, dass die Begriffe "mindestens ein" und "ein oder mehrere" sowie grammatikalische Abwandlungen dieser Begriffe oder ähnliche Begriffe, wenn diese in Zusammenhang mit einem oder mehreren Elementen oder Merkmalen verwendet werden und ausdrücken sollen, dass das Element oder Merkmal einfach oder mehrfach vorgesehen sein kann, in der Regel lediglich einmalig verwendet werden, beispielsweise bei der erstmaligen Einführung des Merkmals oder Elementes. Bei einer nachfolgenden erneuten Erwähnung des Merkmals oder Elementes wird der entsprechende Begriff "mindestens ein" oder "ein oder mehrere" in der Regel nicht mehr verwendet, ohne Einschränkung der Möglichkeit, dass das Merkmal oder Element einfach oder mehrfach vorgesehen sein kann.

Weiterhin werden im Folgenden die Begriffe "vorzugsweise", "insbesondere", "beispielsweise" oder ähnliche Begriffe in Verbindung mit optionalen Merkmalen verwendet, ohne dass alternative Ausführungsformen hierdurch beschränkt werden. So sind Merkmale, welche durch diese Begriffe eingeleitet werden, optionale Merkmale, und es ist nicht beabsichtigt, durch diese Merkmale den Schutzumfang der Ansprüche und insbesondere der unabhängigen Ansprüche einzuschränken. So kann die Erfindung auch unter Verwendung anderer Ausgestaltungen durchgeführt werden. In ähnlicher Weise werden Merkmale, welche durch "in einer Ausführungsform der Erfindung" oder durch "in einem Ausführungsbeispiel der Erfindung" eingeleitet werden, als optionale Merkmale verstanden, ohne dass hierdurch alternative Ausgestaltungen oder der Schutzumfang der unabhängigen Ansprüche eingeschränkt werden soll. Weiterhin sollen durch diese einleitenden Ausdrücke sämtliche Möglichkeiten, die hierdurch eingeleiteten Merkmale mit anderen Merkmalen zu kombinieren, seien es optionale oder nicht-optionale Merkmale, unangetastet bleiben.

Ein erster Aspekt der Erfindung betrifft eine Transporteinheit zum Einlagern und Auslagern von Gegenständen in ein mehrere übereinander angeordnete Ablagefächer aufweisendes Regallager, wobei die Transporteinheit ein Rahmengehäuse umfasst, das auf zwei gegenüberliegenden Seiten offen ist, in dem Rahmengehäuse eine Ablagefläche zur temporären Aufnahme eines ein- oder auszulagernden Gegenstandes angeordnet ist, und ein Greifer entlang einer durch die beiden offenen Seiten verlaufenden Achse verschiebbar gelagert ist. Der Greifer weist mindestens ein Eingriffsmittel auf, das ausgebildet ist, ein Ablagefach lösbar an dem Greifer festzulegen. Ferner ist im Rahmengehäuse mindestens ein relativ zur Ablagefläche bewegbares Positioniermittel zur Positionierung des Gegenstandes auf der Ablagefläche angeordnet.

Ein weiterer Aspekt der Erfindung betrifft ein Ablagefach zum Einlagern und Auslagern von Gegenständen in ein Regallager, wobei das Ablagefach einen Boden und optional Seitenwände aufweist, und wobei das Ablagefach in gegenüberliegenden Randbereichen jeweils mindestens eine Aussparung aufweist, wobei die Breite des jeweiligen Randbereichs nicht mehr als 15 Prozent der Gesamtbreite des Ablagefaches beträgt.

Ein weiterer Aspekt der Erfindung betriff ein Regallager zum Einlagern und Auslagern von Gegenständen, das mehrere übereinander angeordnete erfindungsgemäße Ablagefächer und/oder eine erfindungsgemäße Transporteinheit aufweist.

Durch die erfindungsgemäßen Vorrichtungen werden mehrere Vorteile erzielt: Es hat sich gezeigt, dass durch das Zusammenwirken des mit Eingriffsmitteln versehenen Greifers und des Positioniermittels der für die Einlagerung und Auslagerung von Gegenständen erforderliche Bauraum minimiert werden kann, insbesondere dadurch, dass ein Teil der Relativbewegung des Gegenstandes durch Herausziehen des Ablagefachs erfolgen kann. Als Folge lässt sich auf demselben Bauraum eine größere Anzahl an unterschiedlichen Gegenständen in dem erfindungsgemäßen Regallager bevorraten, die flexibel ein- und ausgelagert werden können. Weiterhin gelingt es durch die erfindungsgemäßen Vorrichtungen, mehrere auf dem Ablagefach nebeneinander und/oder hintereinander angeordnete Gegenstände in einfacher Weise schnell ein- oder auszulagern. Unter anderem dadurch gelingt es, die Dauer der zur Einlagerung oder Auslagerung benötigten Zeitspannen deutlich zu reduzieren, was sich wiederum positiv auf Effizienz und Produktivität auswirkt. Ein weiterer Vorteil ist, dass die Vorrichtungen für viele unterschiedliche zu lagernde Gegenstände geeignet, da die Transporteinheit universell in dem Sinn ist, dass sie nicht auf eine bestimmte Art von Gegenständen angepasst ist. Schließlich sind die erfindungsgemäßen Vorrichtungen einfach im konstruktiven Aufbau und erfordern nur einen geringen Wartungsaufwand.

### Bevorzugte Ausgestaltungen der Erfindung

Vorteilhafte Aus- und Weiterbildungen, welche einzeln oder in Kombination miteinander eingesetzt werden können, sind Gegenstand der abhängigen Ansprüche und der nachfolgenden Beschreibung.

In einer Ausführungsform der Erfindung handelt es sich bei den zu lagernden Gegenstände um Bauteile oder Zubehör für den Zusammenbau von elektronischen Geräten, beispielsweise um Gurtspulen oder Gurtrollen mit darin aufgenommenen elektrischen Bauteilen für elektronische Geräte, als Stangenware vorkonfektionierte Bauteile, Boxen oder Schachteln mit lose darin gelagerten Bauteilen, einzelne Bauteile, flächige Bauteile, Leiterplatten oder Lotpaste.

Ein gattungsgemäßes Regallager umfasst typischerweise mehrere nebeneinander angeordnete Regalabteile, in denen sich jeweils übereinander angeordnete Ablagefächer befinden. Die Regalabteile sind zur Seite durch Seitenteile begrenzt und zumindest zu ihrer Vorderseite offen, um Gegenstände auf die Ablagefächer legen zu können bzw. Gegenstände aus den Ablagefächern entnehmen zu können. Im Folgenden wird die horizontale Richtung entlang der Vorderseite der Regalabteile als "Längsrichtung", "x-Richtung" oder "x-Achse" bezeichnet. Die andere horizontale Richtung quer zur Längsrichtung wird als "Querrichtung", "y-Richtung" oder "y-Achse" bezeichnet. Die dritte Raumrichtung in die Vertikale wird als "vertikale Richtung", "Vertikalrichtung", "z-Richtung" oder "z-Achse" bezeichnet.

Die Transporteinheit kann vorteilhaft bei Regallagern eingesetzt werden, bei denen sie in der Längsrichtung und in vertikaler Richtung entlang der Vorderseite von Regalabteilen bewegt wird, sodass jedes Regalfach einfach und schnell erreichbar ist. Vorzugsweise wird die Transporteinheit entlang jeweils einer Linearführung in Längsrichtung und in vertikaler Richtung geführt. Entsprechende Vorrichtungen und Antriebe sind im Stand der Technik bekannt.

In einer Ausführungsform umfasst das Rahmengehäuse Profile aus einem harten Werkstoff, wobei die Profile die Struktur des Rahmengehäuses bilden. Der harte Werkstoff kann beispielsweise ein Kunststoff, ein Metall oder ein mehrere Einzelwerkstoffe umfassender Verbundwerkstoff sein. Vorzugsweise ist der harte Werkstoff ein Metall, insbesondere Aluminium.

Zwei sich gegenüberliegenden Seiten des Rahmengehäuses sind offen, damit die zu transportierenden Gegenstände in die Transporteinheit eingebracht und aus dieser entnommen werden können. Bei der durch die beiden offenen Seiten verlaufende Achse handelt es sich daher gemäß der oben eingeführten Nomenklatur um die y-Achse.

Die restlichen Seiten des Rahmengehäuses können offen oder geschlossen sein. Bei Ausführungsformen mit geschlossenen Seiten sind die Seiten vorzugsweise aus leichten Werkstoffen wie Kunststoffen gefertigt. Der damit verbundene Vorteil eines vergleichsweise geringen Gewichts trägt zu einem niedrigen Energieverbrauch beim Betrieb der Transporteinheit in einem Regallager bei.

Die Transporteinheit weist in ihrem Rahmengehäuse eine Ablagefläche zur temporären Aufnahme eines einzulagernden oder auszulagernden Gegenstandes auf. Unter einer "temporären Aufnahme" ist zu verstehen, dass die Ablagefläche nicht als dauerhafter Aufbewahrungsort für zu lagernde Gegenstände vorgesehen ist. Die Ablagefläche dient insbesondere dazu, einen Gegenstand an einem Ort in dem Regallager aufzunehmen, ihn an einen anderen Ort zu transportieren und dort wieder auszulagern.

Die Ablagefläche kann starr oder beweglich sein. In einer Ausführungsform ist die Ablagefläche starr, insbesondere fest mit dem Rahmengehäuse verbunden. Die Aufnahme und Abgabe von Gegenständen erfolgt in diesem Fall durch das Zusammenwirken des Greifers und der Positioniermittel. Ein Vorteil dieser Ausgestaltung ist der einfache mechanische Aufbau, der beispielsweise keinerlei Wartung erfordert.

In einer anderen Ausführungsform ist die Ablagefläche der Transporteinheit die Oberfläche einer Fördereinrichtung. Obwohl diese Ausgestaltung aufwändiger ist als eine starre Ablagefläche, bietet sie den Vorteil, dass die Ablagefläche selbst als Transportmittel eingesetzt werden kann, beispielsweise im Zusammenspiel mit dem Greifer und dem Positioniermittel, oder auch ohne ein derartiges Zusammenspiel als reine Fördereinrichtung von einem Ende des Rahmengehäuses zum anderen Ende. In einer bevorzugten Ausgestaltung ist die Fördereinrichtung als Förderband ausgestaltet.

Die Transporteinheit umfasst weiterhin einen Greifer. Der Greifer ist entlang einer durch die beiden offenen Seiten verlaufenden Achse (y-Achse) verschiebbar gelagert und weist mindestens ein Eingriffsmittel auf, das ausgebildet ist, ein Ablagefach lösbar an dem Greifer festzulegen. Der Greifer ist damit in der Lage, die in einem Regallager befindlichen Ablagefächer aus dem Regallager herauszuziehen und wieder in das Regallager einzuschieben.

Der Greifer kann unterschiedlich gestaltet sein. In einer Ausführungsform umfasst der Greifer mindestens einen Greifarm, der neben, oberhalb oder unterhalb der Ablagefläche relativ zur Ablagefläche verschiebbar angeordnet sein kann. In einer Ausführungsform umfasst der Greifer zwei Greifarme, die parallel zueinander auf beiden Seiten der Ablagefläche angeordnet sind. Gegenüber der Variante mit einem Greifarm hat diese Ausgestaltung den Vorteil, dass ein gleichmäßiger Eingriff an die Ablagefächer im Regallager an den beiden äußeren Seiten möglich ist. Die Greifarme sind vorzugsweise entlang von Linearführungen verschiebbar gelagert. Geeignete Antriebe wie Linearmotoren sind im Stand der Technik bekannt.

In einer Ausführungsform ist der Greifer in mindestens einer weiteren Achse, die nicht identisch mit der durch die beiden offenen Seiten verlaufenden Achse ist, verschiebbar. Dabei kann es sich um die x-Achse, die z-Achse oder eine andere, nicht orthogonale zur y-Achse verlaufende Achse handeln. Ein Vorteil dieser Ausgestaltung ist, dass komplexe Bewegungsabläufe des Greifers ermöglicht werden, indem Bewegungen in unterschiedliche Raumrichtungen kombiniert werden können.

Mittels des Greifers können die Ablagefächer im Regallager bewegt werden. In welcher Weise die Ablagefächer bewegt werden, lässt sich durch die bauliche Gestaltung des Greifers sowie eine entsprechende Programmierung der Bewegungsabläufe in einer Steuereinheit konfigurieren.

In einer Ausführungsform ist der Greifer konfiguriert, Ablagefächer komplett aus dem Regallager herauszuziehen und anschließend das herausgezogene Ablagefach in ein anderes Regalfach einzuschieben oder auf der Ablagefläche der Transporteinheit abzulegen, zum Beispiel um es an einen anderen Ort im Regallager zu transportieren.

In einer weiteren Ausführungsform ist der Greifer konfiguriert, nach Festlegung eines Ablagefachs durch das Eingriffsmittel das Ablagefach zwischen einer vollständig in das Regallager eingeschobenen Position und einer herausgezogenen Position, bei der das Ablagefach zumindest teilweise die Ablagefläche der Transporteinheit überdeckt, zu verschieben. Bei dieser Ausgestaltung können Greifer, teilweise herausgezogenes Ablagefach sowie Positioniermittel vorteilhaft zusammenwirken, sodass der für die Entnahme eines Gegenstandes aus einem Ablagefach oder dessen Einlegen in das Ablagefach erforderliche Bauraum minimiert werden kann, insbesondere der erforderliche Bauraum in y-Richtung.

In einer weiteren Ausführungsform ist der Greifer konfiguriert, nach Festlegung eines Ablagefachs durch das Eingriffsmittel das Ablagefach zwischen einer vollständig in das Regallager eingeschobenen Position, einer herausgezogenen Position, bei der das Ablagefach zumindest teilweise die Ablagefläche der Transporteinheit überdeckt, und einer vollständig herausgezogenen Position zu verschieben.

Die Transporteinheit kann sowohl in Regallagern mit nur einer Reihe an Regalabteilen als auch in Regallagern mit mehreren, insbesondere parallelen, Reihen an Regalabteilen eingesetzt werden. In letzterem Fall ist die Transporteinheit vorzugsweise zwischen zwei Regalreihen angeordnet, sodass sie an einer ihrer offenen Seite die Regalabteile der einen Regalreihe bedienen kann und an ihrer gegenüberliegenden offenen Seite die Regalabteile der anderen Regalreihe bedienen kann. In einem solchen Fall ist der Greifer vorzugsweise konfiguriert, nach Festlegung eines Ablagefachs durch das Eingriffsmittel das Ablagefach zwischen einer vollständig in das eine Regallager eingeschobenen Position, einer herausgezogenen Position, bei der das Ablagefach zumindest teilweise die Ablagefläche der Transporteinheit überdeckt, einer vollständig herausgezogenen Position, einer herausgezogenen Position, bei der das Ablagefach teilweise in dem anderen Regallager eingeschoben ist, und einer vollständig in das andere Regallager eingeschobenen Position zu verschieben. Dadurch lässt sich auf einfache Weise ein Umsortieren von Ablagefächern aus einem Regalabteil in ein anderes Regalabteil einer anderen Regalreihe bewerkstelligen.

Der Greifer weist mindestens ein Eingriffsmittel auf, das ausgebildet ist, ein Ablagefach lösbar an dem Greifer festzulegen. Das eine oder die mehreren Eingriffsmittel können unterschiedlich gestaltet sein, solange sie ein lösbares Festlegen ermöglichen. Die Gestaltung der Eingriffsmittel kann in Abhängigkeit von den im Regallager vorhandenen Gegebenheiten gewählt werden. Beispielsweise kann bei Ablagefächern, die aus einem ferromagnetischen Material gefertigt sind, das Eingriffsmittel ein Magnet sein, der gesteuert eingeschaltet und ausgeschaltet werden kann, insbesondere ein Elektromagnet.

In einer Ausführungsform ist das Eingriffsmittel ein von der Oberseite des Greifers nach oben ragender Stift. Bei dieser Ausführungsform weisen die Ablagefächer vorzugsweise Aussparungen auf, in die der Stift eingreifen kann, beispielsweise Nuten oder Löcher. In einer bevorzugten Variante befinden sich die Aussparungen seitlich an den Ablagefächern, sodass der Greifer durch eine Bewegung in zwei Raumrichtungen, beispielsweise in y-Richtung und in x-Richtung oder in y-Richtung und in z-Richtung, das Ablagefach mittels des Stiftes festlegen kann. Bei dieser Variante ist es weiterhin bevorzugt, dass auf beiden Seiten der Ablagefächer Aussparungen vorhanden sind, in die ein Greifer mit zwei Greifarmen, auf denen jeweils ein Stift als Eingriffsmittel vorhanden ist, eingreifen kann. Weiterhin bevorzugt weisen die Ablagefächer auch in y-Richtung mehrere Aussparungen auf. Dies hat den Vorteil, dass der Greifer das Ablagefach zunächst ein Stück weit herausziehen kann, anschließend die Eingriffsmittel an eine andere Position setzt, und dann das Ablagefach weiter oder komplett herauszieht. Diese Vorgehensweise ist selbstverständlich auch bei Ausführungsformen ohne Stift, beispielsweise bei einem Magnet als Eingriffsmittel, möglich.

In einer weiteren Ausführungsform ist das Eingriffsmittel ein Stift, der in vertikaler Richtung zwischen einer Ruheposition und einer Arbeitsposition bewegbar ist. Der Stift ist vorzugsweise so am oder im Greifer gelagert, dass sich sein oberes Ende in der Ruheposition unterhalb der Oberseite des Greifers befindet und in der Arbeitsposition über die Oberseite des Greifers hinausragt. Diese Ausführungsform kann in ähnlicher Weise eingesetzt werden wie die Ausführungsform mit fest angeordneten Stiften. Dem größeren Aufwand der mechanischen Konstruktion dieser Ausführungsform steht als Vorteil gegenüber, dass zum Eingriff in die Aussparungen in einem Ablagefach eine Bewegung des Greifers in y-Richtung genügt. Das Festlegen des Ablagefaches erfolgt in diesem Fall durch das Ausfahren der beweglichen Stifte in die Aussparungen des Ablagefachs.

In einer Variante der Ausführungsform mit einem oder mehreren Greifarmen und einem oder mehreren Stiften als Eingriffsmittel sind auf jedem Greifarm mindestens zwei Stifte an gegenüberliegenden Enden (in y-Richtung) des Greifarms angeordnet. Vorzugsweise sind die Stifte in diesem Fall symmetrisch angeordnet. Diese Variante ist insbesondere von Vorteil, wenn die Transporteinheit zwischen zwei Regalreihen eingesetzt wird. In einem solchen Fall können die Greifer entweder in Ablagefächer der einen Regalreihe oder in Ablagefächer der gegenüberliegenden anderen Regalreihe eingreifen. Auch ist es auf einfache Art möglich, dass der Greifer ein Ablagefach aus der einen Regalreihe aufnimmt und in die andere Regalreihe einschiebt.

Zur Positionierung des entnommenen Gegenstandes ist in dem Rahmengehäuse mindestens ein relativ zur Ablagefläche bewegbares Positioniermittel angeordnet. Das Positioniermittel kann unterschiedlich ausgeführt sein, solange es - gegebenenfalls im Zusammenspiel mit dem Greifer - die Funktion erfüllt, den Gegenstand an eine bestimmte Position auf der Ablagefläche der Transporteinheit zu bringen.

In einer Ausführungsform umfasst das Positioniermittel mindestens eine Klappe, die zwischen einer Ruheposition und einer Arbeitsposition schwenkbar ist, wobei die Klappe in der Arbeitsposition zumindest teilweise in den Raum über der Ablagefläche ragt. Die Klappe kann einteilig oder mehrteilig sein. In einer Variante ist die Klappe derart im oder am Gehäuserahmen gelagert, dass sie in der Ruheposition neben der Ablagefläche an einer Seitenwand anliegt und in die Arbeitsposition durch Bewegungen in x-Richtung und y-Richtung gebracht wird. In einer weiteren Variante umfassen die Positioniermittel zwei Klappen, die auf gegenüberliegenden Seiten im oder am Gehäuserahmen gelagert sind. Vorzugsweise sind die beiden Klappen symmetrisch aufgebaut. Ihr Bewegungsablauf ist in diesem Fall vorzugsweise ebenfalls symmetrisch.

In einer Ausführungsform umfasst das Positioniermittel einen Schieber, der oberhalb der Ablagefläche angeordnet und zwischen einer angehobenen Ruheposition und einer abgesenkten Arbeitsposition bewegbar ist. Die Bewegung des Schiebers erfolgt vorzugsweise über einen Antrieb, der am Gehäuserahmen befestigt ist, beispielsweise an seiner Oberseite oder einer Seitenwand. Der Schieber ist vorzugsweise derart gestaltet, dass er in mindestens zwei Raumrichtung, die y-Richtung und die z-Richtung, bewegbar ist. Der Schieber kann auch derart gestaltet sein, dass er in alle drei Raumrichtungen bewegbar ist. Der zum Eingriff mit dem zu bewegenden Gegenstand vorgesehene Abschnitt des Schiebers kann jede Form aufweisen, die geeignet ist, den Gegenstand an eine bestimmte Position zu bringen. Er kann insbesondere gerade oder gekrümmt, einteilig oder mehrteilig gestaltet sein.

Die beispielhaft genannten Positioniermittel können auch kombiniert werden, also insbesondere mindestens eine horizontal bewegliche Klappe mit einem vertikal bewegbaren Schieber. Selbstverständlich sind auch Kombinationen mit andere Ausgestaltungen von Positioniermitteln im Rahmen der Erfindung möglich.

Ein weiterer Aspekt der Erfindung betrifft ein Ablagefach zum Einlagern und Auslagern von Gegenständen in ein Regallager. Das Ablagefach kann als flaches Blech gestaltet sein, sodass es lediglich einen Boden aufweist, In einer Abwandlung weist das Ablagefach zusätzlich Seitenwände auf, wobei die zur Entnahme von Gegenständen vorgesehene Vorderseite offen ist. In gegenüberliegenden Randbereichen weist das Ablagefach Aussparungen auf, in die Eingriffsmittel des Greifers eingreifen können. Die Aussparungen sind vorzugsweise als Nuten mit Öffnungen zur Kante oder als Löcher im Material des Ablagefachs ausgebildet. Um einerseits eine ausreichend große Angriffsfläche zum Eingreifen des Greifers zur Verfügung zu haben, und andererseits die zum Lagern von Gegenständen nicht unnötig zu beschränken, sind die Aussparungen lediglich in einem Randbereich des Ablagefaches angebracht, dessen Breite auf jeder Seite nicht mehr als 15 Prozent, bevorzugt nicht mehr als 10 Prozent, weiterhin bevorzugt nicht mehr als 5 Prozent der Gesamtbreite des Ablagefaches beträgt.

In einer Ausführungsform weist das Ablagefach mehrere im Randbereich hintereinander angeordnete Aussparungen auf. Die mehreren Aussparungen können symmetrisch oder unsymmetrisch angeordnet sein. Vorzugsweise sind sie achsensymmetrisch in dem Sinne, dass die Aussparungen auf einer Seite des Ablagefachs symmetrische Entsprungen auf der anderen Seite des Ablagefachs haben. Vorzugsweise sind zwei, drei oder vier Aussparungen in den Randbereichen hintereinander angeordnet. Die Abstände zwischen den Aussparungen können gleich oder unterschiedlich sein, vorzugsweise sind sie gleich.

Ein weiterer Aspekt der Erfindung betrifft ein Regallager zum Einlagern und Auslagern von Gegenständen, das mehrere übereinander angeordnete Ablagefächer und eine erfindungsgemäße Transporteinheit aufweist. Gattungsgemäße Regallager sind hinsichtlich ihres konstruktiven Aufbaus im Stand der Technik bekannt, beispielsweise aus den zitierten Dokumenten DE 10 2012 025 424 A1 und DE 10 2013 006 524 A1.

In einer Ausführungsform umfasst das Regallager mehrere nebeneinander angeordnete, zu ihrer gemeinsamen Vorderseite offene Regalabteile, in denen jeweils mehrere Ablagefächer übereinander angeordnet sind. Zur Aufnahme von Ablagefächern können die Regalabteile beispielsweise Aufnahmevorrichtungen wie Führungsschienen an ihren Seitenwänden aufweisen.

In einer weiteren Ausführungsform umfasst das Regallager mindestens zwei Regalreihen, die jeweils mehrere nebeneinander angeordnete, zu ihrer gemeinsamen Vorderseite offene Regalabteile umfassen. Zwischen den beiden Regalreihen ist ein Zwischenraum vorhanden, in dem eine erfindungsgemäße Transporteinheit bewegt werden kann, um beide Regalreihen zu bedienen.

In einer Ausführungsform umfasst das Regallager mindestens zwei Regalreihen, die jeweils mehrere nebeneinander angeordnete, zu ihrer gemeinsamen Vorderseite offene Regalabteile umfassen, in denen jeweils mehrere Ablagefächer übereinander angeordnet sind, wobei die beiden Regalreihen mit ihrer Rückseite einander zugewandt sind, und die beiden Regalreihen durch mindestens eine Fördereinheit verbunden sind, die von der Vorderseite der einen Regalreihe durch beide Regalreihen hindurch bis zur Vorderseite der anderen Regalreihe verläuft. Ein Vorteil dieser Ausführungsform besteht darin, das auf einfache und schnelle Weise zu lagernde Gegenstände zwischen parallelen Reihen von Teilregallagern transportiert werden können.

In einer Ausführungsform umfasst das Regallager mehrere nebeneinander angeordnete, zu ihrer gemeinsamen Vorderseite offene Regalabteile, in denen jeweils mehrere Ablagefächer übereinander angeordnet sind, wobei eine erfindungsgemäße Transporteinheit in Längsrichtung entlang der Vorderseite der Regalabteile bewegbar angeordnet ist, und das Regallager eine zusätzliche Fördereinrichtung aufweist, deren Förderrichtung in Längsrichtung verläuft und für eine Übergabe von Gegenständen durch die Transporteinheit zugänglich ist. In einer Variante ist die zusätzliche Fördereinrichtung vor den Regalabteilen angeordnet, beispielsweise nahe am Boden im unteren Bereich der Regalabteile. In einer anderen Variante ist die zusätzliche Fördereinrichtung innerhalb der Regalabteile angeordnet, beispielsweise in Freiräumen der Regalabteile, die nicht für eine Ablage von Ablagefächern genutzt werden können. Vorzugsweise erstreckt sich die zusätzliche Fördereinrichtung über die gesamte Länge der benachbarten Regalabteile. Die zusätzliche Fördereinrichtung kann jede zur Förderung von Gegenständen geeignete Vorrichtung sein. Vorzugsweise umfasst die zusätzliche Fördereinrichtung Förderrollen oder ein Förderband. Die zusätzlichen Fördereinrichtungen stellen zusätzliche Förderkapazität für einzulagernde oder auszulagernde Bauteile bereit, was sich positiv auf die zur Einlagerung oder Auslagerung benötigten Zeiten auswirkt.

### Kurzbeschreibung der Zeichnungen

Weitere vorteilhafte Ausgestaltungen werden nachfolgend anhand mehrerer in den Zeichnungen dargestellten Ausführungsbeispielen, auf welche die Erfindung jedoch nicht beschränkt ist, näher beschrieben. Die Zeichnungen sind als Prinzip-Darstellungen zu verstehen. Sie stellen keine Beschränkung der Erfindung dar, beispielsweise im Hinblick auf konkrete Abmessungen oder Ausgestaltungsvarianten, sofern sich aus der Beschreibung der Zeichnungen nichts Gegenteiliges ergibt.

Es zeigen schematisch:
- Figur 1: eine Draufsicht auf eine erste Ausführungsform einer erfindungsgemäßen Transporteinheit;
- Figur 2: eine Seitenansicht der in Figur 1 dargestellten ersten Ausführungsform der Transporteinheit;
- Figur 3: eine Draufsicht auf die in den Figuren 1 und 2 dargestellte erste Ausführungsform der Transporteinheit beim Auslagern eines Gegenstandes aus dem Regallager;
- Figur 4: eine Draufsicht auf eine zweite Ausführungsform einer erfindungsgemäßen Transporteinheit beim Auslagern eines Gegenstandes aus dem Regallager;
- Figur 5: eine Seitenansicht einer ersten Ausführungsform eines erfindungsgemäßen Regallagers;
- Figur 6: eine Draufsicht auf die in Figur 5 dargestellte erste Ausführungsform des Regallagers;
- Figur 7: eine Draufsicht auf eine zweite Ausführungsform eines erfindungsgemäßen Regallagers.

### Detaillierte Beschreibung von Ausführungen der Erfindung

Bei der nachfolgenden Beschreibung von bevorzugten Ausführungsformen der vorliegenden Erfindung bezeichnen gleiche Bezugszeichen gleiche oder vergleichbare Komponenten. Bei mehreren gleichen Komponenten ist in der Regel nur eine mit einem Bezugszeichen versehen.

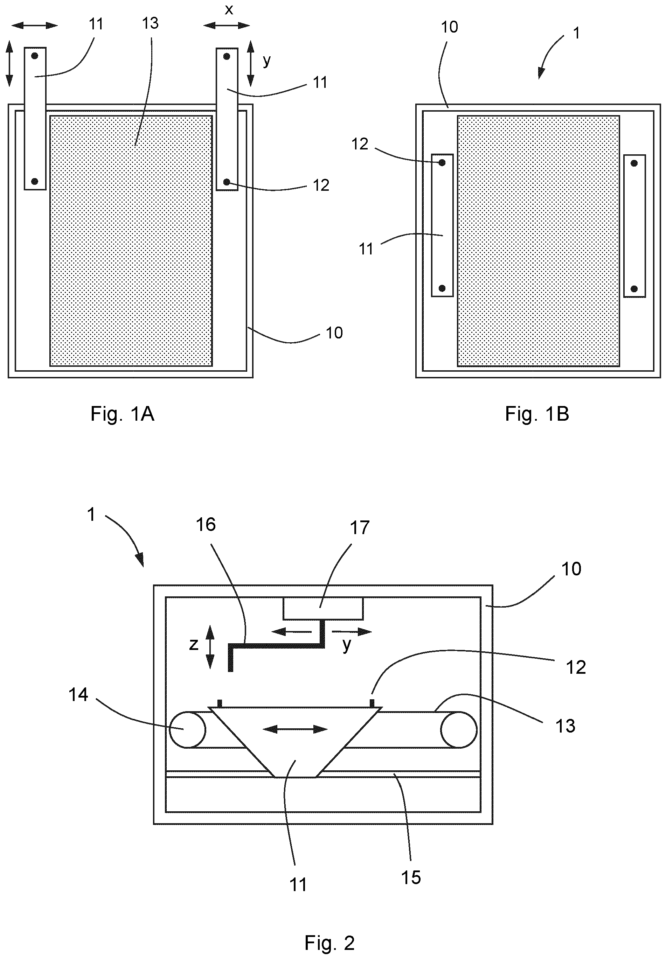

Die Figuren 1 und 2 zeigen eine erste Ausführungsform einer erfindungsgemäßen Transporteinheit 1 in einer Draufsicht bzw. einer Seitenansicht. Bei der in den Figuren 1A und 1B dargestellten Draufsicht ist der obere Teil der Transporteinheit 1, die das Positioniermittel 16 umfasst, nicht dargestellt.

Die Transporteinheit 1 umfasst ein Rahmengehäuse 10, das auf zwei gegenüberliegenden Seiten offen ist. In der Darstellung gemäß Figur 2 sind dies die linke Seite und die rechte Seite. Der besseren Darstellbarkeit halber ist auch die aus der Zeichenebene herausragende Seite offen dargestellt. Sie kann jedoch offen oder geschlossen ausgeführt sein. Ebenso kann die in die Zeichenebene hineinragende Seite, die Unterseite und die Oberseite offen oder geschlossen gestaltet sein. Das Rahmengehäuse 10 wird von Profilen gebildet, die dem Gehäuse die Struktur verleihen. Dabei kann es sich beispielsweise um Rechteckprofile handeln, die an den Ecken miteinander befestigt sind.

In dem Rahmengehäuse 10 ist eine Ablagefläche 13 zur temporären Aufnahme eines ein- oder auszulagernden Gegenstandes 19 angeordnet. Die Ablagefläche 13 ist in dem dargestellten Beispiel als Oberfläche eines Förderbandes ausgestaltet. Das Förderband ist innerhalb des Rahmengehäuses 10 gelagert und wird durch zwei Rollen 14 angetrieben, die nahe der beiden offenen Stirnseiten angeordnet sind. Das Förderband ist in y-Richtung ausgerichtet, sodass es in der Lage ist, Gegenstände 19 in y-Richtung zu befördern.

Die Transporteinheit 10 umfasst weiterhin einen Greifer 11, der entlang der durch die beiden offenen Seiten verlaufenden Achse, also der y-Achse, verschiebbar gelagert ist. Der Greifer 11 dieses Ausführungsbeispiels umfasst zwei Greifarme, die parallel zueinander auf beiden Seiten der Ablagefläche 13 angeordnet sind. Die Greifarme sind als flächige Gebilde ausgeführt, deren Längsschnitt trapezförmig ist, wobei die nach oben gewandte Grundseite länger ist als die nach unten gewandte Grundseite. Die Form der Greifarme kann den jeweils vorliegenden Gegebenheiten angepasst werden und ist nicht auf das dargestellte Beispiel beschränkt. Auf der nach oben weisenden Oberfläche der beiden Greifarme 11 ist an jeweils beiden Enden ein Eingriffsmittel 12 angeordnet, das in diesem Beispiel als nach oben ragender Stift ausgebildet ist.

Die Greifarme sind entlang einer Linearführung 15 in y-Richtung verschiebbar. Die Linearführung 15 ist in Figur 2 lediglich angedeutet und umfasst fest mit dem Rahmengehäuse 10 verbundene Schienen sowie Antriebselemente wie Linearmotoren und die entsprechenden Ansteuerungen, die im Stand der Technik bekannt sind. Figur 1B zeigt die Greifer 11 in der Ruheposition, in der sie sich vollständig innerhalb des Rahmengehäuses 10 befinden. Figur 1A zeigt die Greifer 11 in einer Arbeitsposition, bei der die beiden Greifarme über die offene Stirnseite in y-Richtung hinausgeschoben sind. In dieser Ausführungsform sind die beiden Greifarme auch in x-Richtung verschiebbar, was beispielsweise durch entsprechende Antriebe und Gelenkverbindungen oder in x-Richtung verlaufende Linearführungen erreicht werden kann. Die möglichen Bewegungsrichtungen des Greifers 11 sind in Figur 1A durch die Doppelpfeile angedeutet. In der Arbeitsposition können die Greifarme des Greifers 11 durch ihre als Stifte ausgebildeten Eingriffsmittel 12 in entsprechende Aussparungen eines Ablagefachs im Regallager eingreifen und dieses lösbar an dem Greifer 11 festlegen.

In dem Rahmengehäuse 10 der dargestellten beispielhaften Ausführungsform ist oberhalb der Ablagefläche 13 ein relativ zur Ablagefläche 5 bewegbares Positioniermittel 16 zur Positionierung des Gegenstandes 19 auf der Ablagefläche 5 angeordnet. Das Positioniermittel 16 umfasst einen Schieber, der winklig ausgebildet ist und durch einen am Rahmengehäuse 10 befestigten Antrieb 17 bewegbar ist. Die Pfeile in Figur 2 deuten an, dass der Schieber sowohl in y-Richtung als auch in z-Richtung bewegbar ist. Ohne Beschränkung der Allgemeinheit kann der Schieber auch in x-Richtung bewegbar sein. In seiner Ruheposition befindet sich der Schieber in einer angehobenen Stellung nahe der Oberseite des Rahmengehäuses 10. Zum Eingriff mit einem zu transportierenden Gegenstand 19 wird der Schieber durch den Antrieb 17 in eine abgesenkte Arbeitsposition bewegt.

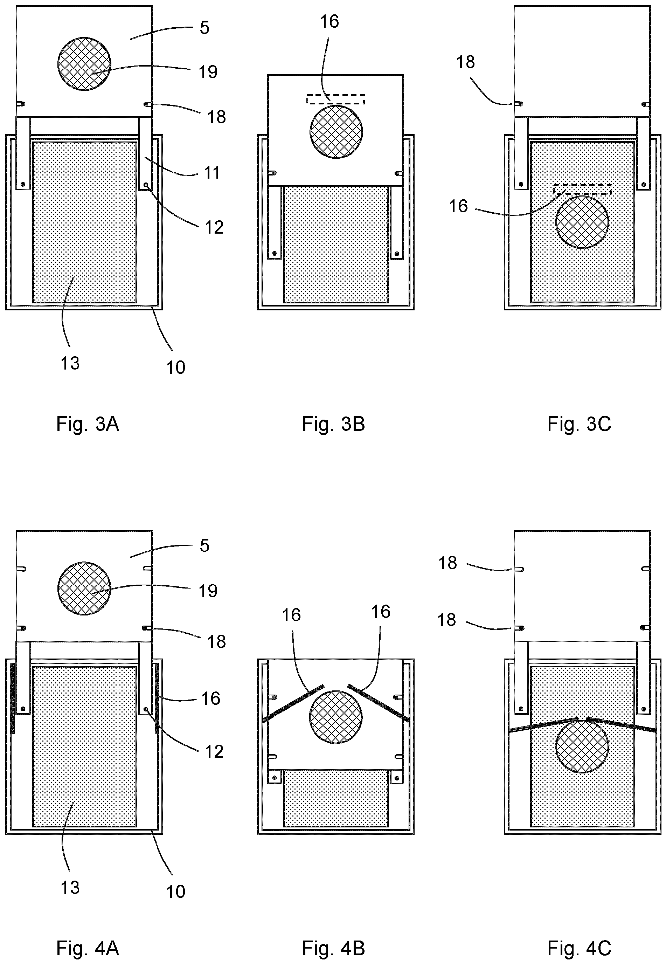

Die Figuren 3A bis 3C erläutern schematisch die Vorgehensweise bei der Entnahme eines Gegenstandes 19 aus dem Regallager mit der in den vorherigen Figuren gezeigten ersten Ausführungsform. Um einen Gegenstand 19 aus einem Regalfach zu entnehmen, verfährt die Transporteinheit zunächst an die entsprechende Stelle im Regallager, sodass eine ihrer offenen Stirnseiten der Vorderseite des betreffenden Regalfachs zugewandt ist. Im nächsten Schritt werden die beiden Greifarme des Greifers 11 in Richtung des Ablagefaches bewegt und greifen in seitlich an dem Ablagefach 5 befindliche Aussparungen 18 ein. Im dargestellten Beispiel sind die Aussparungen 18 zur Kante des Ablagefaches 5 offen, sodass ein Eingriff dadurch erfolgen kann, dass die Greifarme während ihrer Bewegung in y-Richtung auch in x-Richtung nach außen verschoben werden, sodass sich die Eingriffsmittel 12, in diesem Fall die nach oben ragenden Stifte, seitlich neben den Aussparungen 18 befinden. Durch eine nach innen gerichtete Bewegung in x-Richtung können dann die Stifte 12 in die Aussparungen 18 des Ablagefachs 5 eingeführt werden, sodass das Ablagefach 5 an dem Greifer 11 festgelegt ist.

In einer alternativen Ausgestaltung, die in Figur 3 nicht dargestellt ist, sind die Aussparungen 18 als Löcher ausgebildet, die am Rand des Ablagefachs 5 angeordnet sind. In diesem Fall kann ein Eingriff der Stifte 12 dadurch erfolgen, dass die Greifarme während ihrer Bewegung in y-Richtung auch in z-Richtung nach unten bewegt werden, sodass sich die Stifte unterhalb der Löcher im Ablagefach befinden. Durch eine anschließende Bewegung der Greifarme in z-Richtung nach oben können die Stifte in die Löcher eingeführt werden, sodass auch in diesem Fall das Ablagefach 5 an dem Greifer 11 festgelegt ist.

Nachdem das Ablagefach 5 an dem Greifer 11 festgelegt ist, wird der Greifer 11 in y-Richtung zurückbewegt, wie dies in Figur 3B schematisch dargestellt ist. Dabei zieht die Transporteinheit das Ablagefach 5 zumindest teilweise über die Ablagefläche 13. Um den Gegenstand 19 vom Ablagefach 5 auf die Ablagefläche 13 der Transporteinheit zu befördern, wird der Schieber in seine Arbeitsposition abgesenkt und greift im dargestellten Beispiel an der Rückseite des Gegenstandes 19 ein. In den Figuren 3 ist lediglich die Unterseite des Schiebers 16 gestrichelt dargestellt. Der Schieber als Positioniermittel 16 wird derart in y-Richtung bewegt, dass er den Gegenstand 19 auf der Ablagefläche 13 positioniert. Dabei bewegen sich die Greifarme in entgegengesetzte Richtung und schieben das am Greifer 11 festgelegte Ablagefach 5 zurück in das Regallager. Im letzten Schritt des Entnahmevorgangs werden die beiden Greifarme wiederum in x-Richtung und y-Richtung derart bewegt, dass die Stifte 12 aus den Aussparungen 18 entfernt werden, und die Greifarme wieder in ihre Ruheposition bewegt werden. Damit ist der Entnahmevorgang abgeschlossen, und der sich auf der Ablagefläche 13 befindliche Gegenstand 19 kann durch die Transporteinheit an eine beliebige Stelle im Regallager transportiert werden.

Die Figuren 4A bis 4C erläutern schematisch die Vorgehensweise bei der Entnahme eines Gegenstandes 19 aus dem Regallager mit einer zweiten Ausführungsform einer erfindungsgemäßen Transporteinheit. Die Transporteinheit gemäß der zweiten Ausführungsform ist im Wesentlichen identisch aufgebaut wie die oben erläuterte erste Ausführungsform. Die beiden Ausführungsformen unterscheiden sich jedoch in der Art und Wirkungsweise des Positioniermittels 16. Bei der in den Figuren 4 dargestellten zweiten Ausführungsform sind die Positioniermittel 16 als zwei Klappen ausgestaltet, die zwischen einer Ruheposition und einer Arbeitsposition schwenkbar sind. Die Klappen sind jeweils neben der Ablagefläche 13 innen am Rahmengehäuse 10 verschwenkbar angeordnet. Die Verschwenkbarkeit kann durch geeignete bewegliche Lagerungen, Gelenke und entsprechende Antriebe wie Motoren erreicht werden. In der Ruheposition liegen die beiden Klappen 16 flach an den Innenseiten des Rahmengehäuses 10 an, wie dies in Figur 4A angedeutet ist.

Um den Gegenstand 19 vom Ablagefach 5 auf die Ablagefläche 13 der Transporteinheit zu befördern, werden die Greifarme in Aussparungen 18 im Ablagefach 5 geführt und das Ablagefach 5 in y-Richtung über die Ablagefläche 13 bewegt. In dem dargestellten Beispiel weist das Ablagefach 5 jeweils zwei in y-Richtung hintereinander angeordnete Aussparungen 18 auf. In einem ersten Schritt greifen die Stifte 12 als Eingriffsmittel in die vorderen, der Transporteinheit zugewandten Aussparungen 18 ein und ziehen das Ablagefach 5 ein Stück weit in Richtung der Transporteinheit. In einem zweiten Schritt werden die Stifte 12 aus den ersten Aussparungen 18 gelöst und greifen in die hinteren, der Transporteinheit abgewandten Aussparungen 18 ein und ziehen das Ablagefach weiter in Richtung der Transporteinheit. In der in Figur 4B dargestellten Position befindet sich das Ablagefach 5 fast vollständig über der Ablagefläche 13 der Transporteinheit. In dieser Position des Ablagefaches 5 und des darauf befindlichen Gegenstandes 19 schwenken die beiden Klappen als Positioniermittel 16 seitlich aus ihrer Ruheposition nach innen, bis sie in ihrer Arbeitsposition den Gegenstand 19 berühren. Sie ragen dabei in den Raum über der Ablagefläche 13. Anschließend wird das Ablagefach wieder in das Regalfach zurückgeschoben, wobei im dargestellten Beispiel das Zurückschieben ebenfalls zweistufig durch Umsetzen der Stifte 12 von den hinteren in die vorderen Aussparungen 18 des Ablagefachs 5 erfolgt. Der Gegenstand 19 wird dabei von den Klappen 16 gehalten, sodass er auf der Ablagefläche 13 der Transporteinheit zu liegen kommt. Die Klappen 16 können für eine weitere Positionierung sorgen, indem sie den Gegenstand 19 auf der Ablagefläche 13 verschieben.

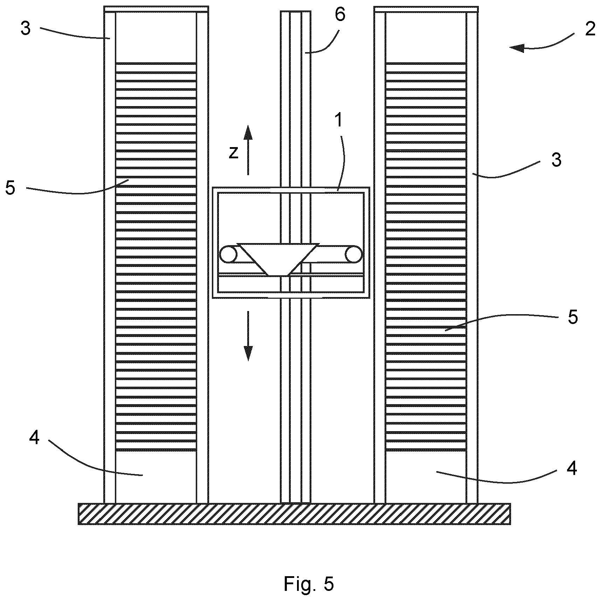

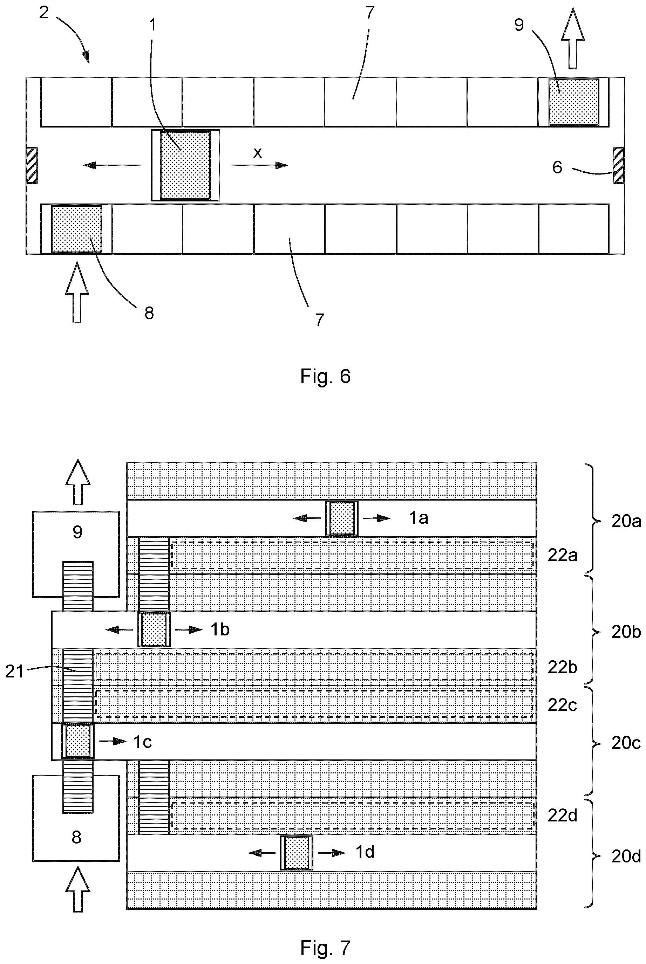

Die Figuren 5 und 6 zeigen schematisch eine erste Ausführungsform eines erfindungsgemäßen Regallagers 2 in einer Seitenansicht bzw. einer Draufsicht.

Das Regallager umfasst zwei Regalreihen, die jeweils mehrere nebeneinander angeordnete Regalabteile 7 umfassen. In dem dargestellten Beispiel umfassen beide Regalreihen acht Regalabteile. Die Regalabteile 7 sind zur Seite durch Seitenteile begrenzt und zumindest zu ihrer Vorderseite offen. Die Seitenteile können offen oder geschlossen sein. Jedes Regalabteil ist konfiguriert, eine Vielzahl an Ablagefächer 5 aufzunehmen, die übereinander angeordnet sind. Dazu können beispielsweise an den Seitenteilen einander gegenüberliegende Führungsschienen angebracht sein, auf denen die Ablagefächer verschiebbar gelagert werden können. Die die Regalreihen bildenden Regalabteile sind aus miteinander verbundenen vertikalen und horizontalen Streben 3 gebildet. Bauweisen und Konstruktionsverfahren für derartige Regalabteile sind aus dem Stand der Technik bekannt.

Die Vorderseiten der beiden Regalreihen sind voneinander beabstandet und bilden einen gleichmäßig breiten Gang. Der Abstand zwischen den beiden Regalreihen ist so bemessen, dass eine erfindungsgemäße Transporteinheit 1 zwischen den beiden Regalreihen in Längsrichtung (x-Richtung) und in vertikaler Richtung (z-Richtung) bewegbar ist. In dem Gang ist eine vertikale Linearführung 6 und eine in den Figuren nicht dargestellte horizontal in Längsrichtung verlaufende Linearführung vorhanden. Die beiden Linearführungen bilden einen Rahmen, in dem die Transporteinheit 1 bewegbar ist. Entsprechende Konstruktionen und Antriebe wie Linearmotoren sind im Stand der Technik bekannt.

Das Regallager 2 ist so ausgelegt, dass jedes Ablagefach 5, das in einer der beiden Regalreihen gelagert ist, von der Transporteinheit 1 angefahren werden kann, um Gegenstände 19 aus dem Ablagefach 5 zu entnehmen oder auf das Ablagefach 5 abzulegen. Durch die Bauart der beispielhaft dargestellten Transporteinheit 1 bedingt, sind die unteren und oberen Enden der Regalreihen nicht zur Einlagerung von Ablagefächern 5 nutzbar und verbleiben als Freiraum 4, der auch als Durchgang zwischen Regalabteilen 7 genutzt werden kann.

Um Gegenstände 19 von außen in das Regallager 2 einzubringen oder aus diesem abzuführen, ist eine Eingang-Übergabestation 8 und eine Ausgang-Übergabestation 9 vorgesehen. Die beiden Übergabestationen 8, 9 sind in diesem Beispiel als Förderbänder konfiguriert, die anstelle von Ablagefächern in jeweils einem Regalabteil 7 der beiden Regalreihen angeordnet sind. Die in Figur 6 dargestellte Anordnung der Übergabestationen 8, 9 an gegenüberliegenden Enden des Regallagers 2 ist lediglich beispielhaft. Die Übergabestationen 8, 9 können grundsätzlich in jedem Regalabteil 7 angeordnet sein, sodass der Aufbau des Regallagers 2 an die Anforderungen des konkreten Anwendungsfalls anpassbar ist.

In dem dargestellten Beispiel ist die Ablagefläche der Transporteinheit als Förderband ausgebildet. Im Zusammenspiel mit den Förderbändern der beiden Übergabestationen 8, 9 ermöglicht dies einen effizienten Transport von Gegenständen in das Regallager 2 und aus diesem hinaus. Die beiden großen Pfeile in Figur 6 symbolisieren den entsprechenden Warenfluss.

In Figur 7 ist schematisch eine zweite Ausführungsform eines erfindungsgemäßen Regallagers 2 in der Draufsicht dargestellt. Der grundsätzliche Aufbau des in Figur 7 dargestellten Regallagers 2 entspricht dem der ersten Ausführungsform gemäß den Figuren 5 und 6. Allerdings umfasst das Regallager 2 der zweiten Ausführungsform vier Teilregallager 20a, 20b, 20c, 20d, die jeweils zwei Regalreihen umfassen, also insgesamt acht Regalreihen. Jedes Teilregal weist einen Zwischenraum zwischen seinen Regalreihen auf, in dem jeweils eine erfindungsgemäße Transporteinheit 1a, 1b, 1c, 1d bewegbar angeordnet ist. Jede Regalreihe umfasst mehrere nebeneinander angeordnete, zu ihrer gemeinsamen Vorderseite offene Regalabteile 7, in denen jeweils mehrere Ablagefächer 5 übereinander angeordnet sind.

Eine Regalreihe des ersten Teilregals 20a ist mit ihrer Rückseite einer ersten Regalreihe des zweiten Teilregals 20b zugewandt und in dem dargestellten Beispiel fest mit dieser verbunden. Die beiden miteinander verbundenen Regalreihen können auch ein einziges Regal sein, das lediglich doppelt so tief ist wie ein nicht verbundenes Regal. Die Rückseite der zweiten Regalreihe des zweiten Teilregals 20b ist analog mit der Rückseite der ersten Regalreihe des dritten Teilregals 20c verbunden. Die Rückseite der zweiten Regalreihe des dritten Teilregals 20c ist analog mit der Rückseite der ersten Regalreihe des vierten Teilregals 20d verbunden. Die miteinander verbundenen Regalreihen weisen jeweils ein Förderband als gemeinsame Fördereinheit 21 auf, die von der Vorderseite der jeweiligen einen Regalreihe durch beide Regalreihen hindurch bis zur Vorderseite der jeweils anderen Regalreihe verläuft.

Um Gegenstände 19 von außen in das Regallager 2 einzubringen oder aus diesem abzuführen, ist eine Eingang-Übergabestation 8 und eine Ausgang-Übergabestation 9 vorgesehen. Die Eingangs-Übergabestation 8 weist ein Förderband auf, dessen eines Ende von einer Bedienperson oder einem Automaten mit einem in das Regallager 2 einzulagernden Gegenstand 19 belegt werden kann. Sein anderes Ende mündet in den von der Transporteinheit 1c im Teilregallager 21 c befahrbaren Gang, sodass die Transporteinheit 1c einzulagernde Gegenstände aufnehmen kann. Die Ausgang-Übergabestation 9 weist ein Förderband auf, von dessen einem Ende eine Bedienperson oder ein Automat einen aus dem Regallager 2 auszulagernden Gegenstand 19 entnehmen kann. Sein anderes Ende mündet in den von der Transporteinheit 1b im Teilregallager 21b befahrbaren Gang, sodass die Transporteinheit 1b auszulagernde Gegenstände an die Ausgang-Übergabestation 9 übergeben kann.

In dem dargestellten Beispiel ist die Ablagefläche der Transporteinheiten 1a, 1b, 1c, 1d jeweils als Förderband ausgebildet. Im Zusammenspiel mit den Förderbändern der beiden Übergabestationen 8, 9 und den Fördereinrichtungen 21 zwischen den Teilregallagern 20 ermöglicht dies einen effizienten Transport von Gegenständen in das Regallager 2 und aus diesem hinaus. Durch den modularen Aufbau und die Verknüpfung der Teilregallager über Fördereinrichtungen 21 kann ein einzulagernder Gegenstand 19 an jede beliebige Stelle im Regallager 2 gebracht werden.

Das in Figur 7 beispielhaft dargestellte Regallager 2 weist weiterhin zusätzliche Fördereinrichtungen 22a, 22b, 22c, 22d auf, deren Förderrichtungen jeweils in Längsrichtung (x-Achse) verlaufen. In diesem Beispiel sind die zusätzlichen Fördereinrichtungen 22 durchgehend durch sämtliche Regalabteile 7 jeweils einer Regalreihe jedes Teilregallagers angeordnet und sind in Figur 7 durch einen gestrichelten Rahmen symbolisiert. Sie sind innerhalb der Regalreihen angeordnet, vorzugsweise in Freiräumen 4 der Regalreihen, die nicht mit Ablagefächern 5 belegbar, aber dennoch für eine Übergabe von Gegenständen 19 durch die jeweiligen Transporteinrichtungen 1a, 1b, 1c, 1d zugänglich sind. Die zusätzlichen Fördereinrichtungen 22 sind in dem dargestellten Beispiel als Förderband ausgebildet und stellen zusätzliche Förderkapazität für einzulagernde oder auszulagernde Bauteile bereit, was sich positiv auf die zur Einlagerung oder Auslagerung benötigten Zeiten auswirkt.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausführungsformen von Bedeutung sein.

### Bezugszeichenliste

- 1: Transporteinheit
- 2: Regallager
- 3: Streben
- 4: Freiraum
- 5: Ablagefach
- 6: Vertikale Linearführung
- 7: Regalabteil
- 8: Eingang-Übergabestation
- 9: Ausgang-Übergabestation
- 10: Rahmengehäuse
- 11: Greifer
- 12: Eingriffsmittel
- 13: Ablagefläche
- 14: Rollen
- 15: Linearführung
- 16: Positioniermittel
- 17: Antrieb für Positioniermittel
- 18: Aussparung
- 19: Gegenstand
- 20: Teilregallager
- 21: Übergabestation
- 22: Fördereinrichtung

## Patentansprüche

1. Transporteinheit (1) zum Einlagern und Auslagern von Gegenständen (19) in ein mehrere übereinander angeordnete Ablagefächer (5) aufweisendes Regallager (2), wobei die Transporteinheit (1) ein Rahmengehäuse (10) umfasst, das auf zwei gegenüberliegenden Seiten offen ist, in dem Rahmengehäuse (10) eine Ablagefläche (13) zur temporären Aufnahme eines ein- oder auszulagernden Gegenstandes (19) angeordnet ist, und ein Greifer (11) entlang einer durch die beiden offenen Seiten verlaufenden Achse verschiebbar gelagert ist, **dadurch gekennzeichnet, dass** der Greifer (11) mindestens ein Eingriffsmittel (12) aufweist, das ausgebildet ist, ein Ablagefach (5) lösbar an dem Greifer (11) festzulegen, und im Rahmengehäuse (10) mindestens ein relativ zur Ablagefläche (5) bewegbares Positioniermittel (16) zur Positionierung des Gegenstandes (19) auf der Ablagefläche (5) angeordnet ist.

2. Transporteinheit nach Anspruch 1, **dadurch gekennzeichnet, dass** der Greifer (11) zwei Greifarme umfasst, die parallel zueinander auf beiden Seiten der Ablagefläche (13) angeordnet sind.

3. Transporteinheit nach Anspruch 1 oder 2, **dadurch gekennzeichnet, dass** der Greifer (11) in mindestens einer weiteren Achse, die nicht identisch mit der durch die beiden offenen Seiten verlaufenden Achse ist, verschiebbar ist.

4. Transporteinheit nach einem der vorhergehenden Ansprüche, **dadurch gekennzeichnet, dass** der Greifer (11) konfiguriert ist, nach Festlegung eines Ablagefachs (5) durch das Eingriffsmittel (12) das Ablagefach (5) zwischen einer vollständig in das Regallager (2) eingeschobenen Position und einer herausgezogenen Position, bei der das Ablagefach (5) zumindest teilweise die Ablagefläche (13) der Transporteinheit (1) überdeckt, zu verschieben.

5. Transporteinheit nach einem der vorhergehenden Ansprüche, **dadurch gekennzeichnet, dass** das Eingriffsmittel (12) ein von der Oberseite des Greifers (11) nach oben ragender Stift ist.

6. Transporteinheit nach einem der vorhergehenden Ansprüche, **dadurch gekennzeichnet, dass** das Positioniermittel (16) mindestens eine Klappe umfasst, die zwischen einer Ruheposition und einer Arbeitsposition schwenkbar ist, wobei die Klappe in der Arbeitsposition zumindest teilweise in den Raum über der Ablagefläche (13) ragt.

7. Transporteinheit nach einem der vorhergehenden Ansprüche, **dadurch gekennzeichnet, dass** das Positioniermittel (16) einen Schieber umfasst, der oberhalb der Ablagefläche (13) angeordnet und zwischen einer angehobenen Ruheposition und einer abgesenkten Arbeitsposition bewegbar ist.

8. Transporteinheit nach einem der vorhergehenden Ansprüche, **dadurch gekennzeichnet, dass** die Ablagefläche (13) der Transporteinheit die Oberfläche einer Fördereinrichtung, insbesondere eines Förderbandes ist.

9. Ablagefach (5) zum Einlagern und Auslagern von Gegenständen (19) in ein Regallager (2), wobei das Ablagefach (5) einen Boden und optional Seitenwände aufweist, **dadurch gekennzeichnet, dass** das Ablagefach (5) in gegenüberliegenden Randbereichen jeweils mindestens eine Aussparung (18) aufweist, wobei die Breite des jeweiligen Randbereichs nicht mehr als 15 Prozent der Gesamtbreite des Ablagefaches (5) beträgt.

10. Regallager (2) zum Einlagern und Auslagern von Gegenständen (19), das mehrere übereinander angeordnete Ablagefächer (5) gemäß Anspruch 9 und/oder eine Transporteinheit (1) nach einem der Ansprüche 1 bis 8 aufweist.

11. Regallager nach Anspruch 10, **dadurch gekennzeichnet, dass** das Regallager mindestens zwei Regalreihen umfasst, die jeweils mehrere nebeneinander angeordnete, zu ihrer gemeinsamen Vorderseite offene Regalabteile umfassen, in denen jeweils mehrere Ablagefächer (5) übereinander angeordnet sind, die beiden Regalreihen mit ihrer Rückseite einander zugewandt sind, und die beiden Regalreihen durch mindestens eine Fördereinheit (21) verbunden sind, die von der Vorderseite der einen Regalreihe durch beide Regalreihen hindurch bis zur Vorderseite der anderen Regalreihe verläuft.

12. Regallager nach Anspruch 10 oder 11, **dadurch gekennzeichnet, dass** das Regallager (2) mehrere nebeneinander angeordnete, zu ihrer gemeinsamen Vorderseite offene Regalabteile umfasst, in denen jeweils mehrere Ablagefächer (5) übereinander angeordnet sind, eine Transporteinheit (1) nach einem der Ansprüche 1 bis 8 in Längsrichtung entlang der Vorderseite der Regalabteile bewegbar angeordnet ist, und das Regallager (2) eine zusätzliche Fördereinrichtung (22) aufweist, deren Förderrichtung in Längsrichtung verläuft und für eine Übergabe von Gegenständen (19) durch die Transporteinheit (1) zugänglich ist.
